# EUROPEAN PATENT SPECIFICATION

(11) **EP 2 716 412 B1**
(45) Date of publication and mention of the grant of the patent: **30.10.2019**
(21) Application number: 13186727.7
(22) Date of filing: 30.09.2013
(51) Int. Cl.: B25F 5/02

(54) **Electric power tool**
Elektrisches Werkzeug
Outil électrique

(30) Priority: 02.10.2012 JP 2012220555; 02.10.2012 JP 2012220556
(43) Date of publication of application: 09.04.2014
(73) Proprietor: Makita Corporation, Anjo-shi, Aichi 446-8502 (JP)
(72) Inventor: Kumagai, Ryunosuke, Anjo-shi, Aichi 446-8502 (JP)
(74) Representative: Kramer Barske Schmidtchen Patentanwälte PartG mbB

(56) References cited:
- EP-A1- 1 690 637
- EP-A1- 2 439 023
- EP-A2- 2 062 700
- JP-A- 2005 040 933
- US-A1- 2006 231 277
- US-A1- 2008 265 695
- US-A1- 2009 322 166

## Description

### BACKGROUND

### Technical field

The present invention relates to an electric power tool in which an electric motor is mounted in a housing that has a half-split structure.

### Description of the Related Art

US 2008/0265695 A1 and EP 1 690 637 A1 disclose an electric power tool in which an electric motor is mounted in a housing that has a half-split structure, respectively. EP 2 062 700 A2 discloses a mid-handle drill construction and an assembly process.

In an electric power tool, a drive motor is mounted in a housing that forms an outer covering (for example, refer to Japanese Laid-Open Patent Publication No. 2012-011533). The housing is formed by combining and integrating half-split resin-molded members. The half-split resin-molded members are combined with each other by screwing, to form the integrated housing (hereinafter, this screwing is termed "combining screwing"). The direction in which screws are located corresponds to a direction in which the half-split resin molded members (to be combined) face each other. That is, the half-split resin-molded members come into contact with each other and are screwed to form the integrated housing so that this combined state is maintained. For this reason, the direction in which the screws are located is set to be orthogonal to the longitudinal direction of the half-split resin-molded members.

On the front side of the electric power tool, there is provided a power transmission mechanism that converts an actuation mode of a rotary drive. The power transmission mechanism includes a hammer mechanism. The actuation of the hammer mechanism is converted to a rotary drive with an impact force. It also includes a speed reduction mechanism that converts torque output. The power transmission mechanism is attached to a motor housing such that it extends forward from a front end of the motor housing. There are two ways to attach the power transmission mechanism to the motor housing. One way is to screw the power transmission mechanism to the combined housing by use of the same screws used when the half-split housings are screwed together. Another way is to screw the power transmission to the combined housing by use of different screws from those when the half-split housing are screwed together (refer to Japanese Laid-Open Utility Model Publication No. H07-007876). Meanwhile, when a high-powered drive motor is mounted in the housing, high rigidity in the motor housing is required. For this reason, when the power transmission mechanism is attached to the motor housing, the power transmission mechanism is preferably attached to the motor housing by use of different screws from those used in combining the half-split housings.

### SUMMARY

In consideration of usability, a size of such an electric power tool has been reduced. However, if the size of the drive motor is reduced, a rotational drive force generated by the drive motor is also reduced. For this reason, the function of the electric power tool may be impaired. Accordingly, in order to reduce the size of the electric power tool, it is preferable to reduce the size of the electric power tool by reducing the size of the housing forming the outer covering of the electric power tool without reducing the rotational drive force generated by the drive motor.

Further, the power transmission mechanism is screwed to the motor housing in a direction orthogonal to the direction in which the half-split housings are combined by screws (hereinafter, this screwing is termed "attaching screwing"). In the "attaching screwing", screws are located along the longitudinal direction of the motor housing. For this reason, screws used in the "attaching screwing" are located in the direction orthogonal to the direction in which screws are located in the "combining screwing". Therefore, as disclosed in Japanese Laid-Open Utility Model Publication No. H07-007876, it is considered that locations of screws used in the "combining screwing" are located offset outwardly compared to locations of screws used in the "attaching screwing".

However, when the locations of screws used in the "combining screwing" are positioned offset outwardly as compared to the locations of screws used in the "attaching screwing", spaces used in the "combining screwing" protrude outwardly in the lateral direction, and thus usability of the electric power tool may deteriorate.

The teachings have been made in consideration of the above-mentioned circumstances, and there is a need in the art to reduce the size of an entire electric power tool in which an electric motor is mounted by reducing the size of a half-split housing forming an outer covering of the electric power tool. At the same time, a sufficient number of turns in a coil is preferably maintained such that the rotational drive force generated by a drive motor can be sufficiently obtained.

Further, there is a need in the electric power tool in which a drive motor is housed and a housing of which includes half-split housings to reduce the length of a protuberance of an entire electric power tool in the lateral direction, while the power transmission mechanism is screwed to the front side of the motor housing.

The above mentioned object is solved by an electric power tool according to claim 1.

An electric power tool according to a first aspect includes a
motor housing that extends in a longitudinal direction, a gear case that is located on the front side of the motor housing, a grip housing that extends downward from the motor housing, an electric motor that is mounted inside the motor housing, a power transmission mechanism section that is located within the gear case, and an output shaft that protrudes forward from a front end of the gear case and outputs power from the power transmission mechanism section. Further, the electric motor includes a stator core that is fixed to the motor housing, a coil that is integrated with the stator core, and a rotor that is provided on the inner periphery of the stator core and is rotated relative to the stator core. The coil includes protruding coil portions that protrude outwardly compared to the stator core in a radial direction. The motor housing is formed by combining a half-split left housing and a half-split right housing. Further, the protruding coil portions are located on either the front side or the rear sides of positions at which screws are fixed when the left and right housings are combined with each other by the screws.

According to the electric power tool of the first aspect, since the
protruding coil portions are located on either the front side or the rear side of positions at which the screws are fixed when the left and right housings are combined with each other by the screws, it is possible to position the protruding coil portions in a dead space. This dead space is formed due to the positions at which the screws are fixed when the left and right housings are combined with each other. Accordingly, it is possible to reduce the size of the motor housing by effectively utilizing this dead space. At the same time, a coil having a sufficient number of turns to provide rotational drive force generated by a drive motor can be sufficiently obtained.

An electric power tool according to a second aspect includes a motor
housing that extends in a longitudinal direction, a gear case that is located on the front side of the motor housing, a grip housing that extends downward from the motor housing, an electric motor that is mounted inside the motor housing, a power transmission mechanism section that is located within the gear case, and an output shaft that protrudes forward from a front end of the gear case and outputs power from the power transmission mechanism section. The electric motor includes a stator core that is fixed to the motor housing, a coil that is integrated with the stator core, and a rotor that is provided on the inner periphery of the stator core and is rotated relative to the stator core. The coil includes a front protruding coil portion that protrudes outwardly in a radial direction on the front side of the stator core, and also includes a rear protruding coil portion that protrudes outwardly in a radial direction on the rear side of the stator core. The motor housing is formed by combining a half-split left housing and a half-split right housing. Further, positions at which screws are fixed when the left and right housings are combined with each other by the screws are located between the front protruding coil portion and the rear protruding coil portion.

According to the electric power tool of the second aspect, the left
housing and the right housing are combined with each other by screws. The screws are preferably located between the front protruding coil portion and the rear protruding coil portion. Therefore, it is possible to effectively utilize a dead space that is formed between the front protruding coil portion and the rear protruding coil portion. Accordingly, it is possible to reduce the size of the motor housing by effectively utilizing a dead space that is likely to be formed in the motor housing. At the same time, a sufficient number of turns in a coil is maintained such that a rotational drive force generated by a drive motor can be sufficiently obtained.

Further, an electric power tool according to a third aspect includes a
motor housing that extends in a longitudinal direction, a gear case that is located on the front side of the motor housing, a grip housing that extends downward from the motor housing, an electric motor that is mounted inside of the motor housing, a power transmission mechanism section that is located within the gear case, and an output shaft that protrudes forward from a front end of the gear case and outputs power from the power transmission mechanism section. Further, the electric motor includes a stator core that is fixed to the motor housing, a coil that is integrated with the stator core, and a rotor that is provided on the inner periphery of the stator core and is rotated relative to the stator core. The coil includes a front protruding coil portion that protrudes on the front side of the stator core, and a rear protruding coil portion that protrudes on the rear side of the stator core. Further, the rear protruding coil portion is formed to be larger than the front protruding coil portion.

According to the electric power tool of the third aspect, since the rear protruding coil portion that protrudes on the rear side of the stator core is formed to be larger than the front protruding coil portion that protrudes on the front side of the stator core, it is possible to reduce the size of the front protruding coil portion. At the same time, a coil with a sufficient number of turns can be provided such that rotational drive force generated by a drive motor can be sufficiently obtained. A front-side structure, in which the front protruding coil portion is located, can be made slim such that an impact driver having a front portion that is slim and easily handled can be obtained.

Further, an electric power tool according to another aspect includes a
drive motor, a housing which is formed by combining a half-split left housing and a half-split right housing and in which the drive motor is mounted, a handle that is formed in the combined housing, a front case that is integrally connected to the combined housing on the front side of the combined housing, a bearing box that is located on the rear side of the combined housing, a power transmission mechanism which receives a rotary drive force from the drive motor and is housed in the front case, and an anvil into which a power is transferred from the power transmission mechanism and which protrudes forward from a front end of the front case. Further, the half-split left housing and the half-split right housing are screwed by a first combining screw and a second combining screw that extend in a combined direction. The half-split left housing is screwed to the front case by a left upper screw and a left lower screw which are separately located from each other in the vertical direction. The screws may be located along the extending direction of the front case. The half-split right housing is screwed to the front case by a right upper screw and a right lower screw which are separately located from each other in the vertical direction. The screws may be located along the extending direction of the front case. The first combining screw is configured above the bearing box and below the left upper screw and the right upper screw. Further, the second combining screw is configured below the bearing box and above the left lower screw and the right lower screw.

According to the electric power tool described above, the first combining screw and the second combining screw are positioned so as not to interfere with the bearing box. Further, the first combining screw and the second combining screw are located below the upper left and right screws and also located above the lower left and right screws. In this way, the upper left and right screws are located on the upper side of the motor housing, and thus a length of protuberance of the upper left and right screws can be reduced. Further, the lower left and right screws are located on the lower side of the motor housing, and thus a length of protuberance of the lower left and right screws can be also reduced. In conclusion, a length of protuberance of the entire electric power tool can be reduced in the lateral direction while the power transmission mechanism is screwed to the front side of the motor housing.

Further, an electric impart tool according to another aspect includes
a drive motor, a housing which is formed by combining a half-split left housing and a half-split right housing and in which the drive motor is mounted, a handle that is formed in the combined housing, a hammer case that is integrally connected to the combined housing on a front side of the combined housing, a bearing box that is located on a rear side of the combined housing, a hammer which receives a rotary drive force from the drive motor and is housed in the hammer case, and an anvil which is hammered by the hammer in a rotational direction and which protrudes forward from a front end of the hammer case. Further, a first combining screw that connects the half-split left housing and the half-split right housing is located on the upper side of the bearing box. A second combining screw that connects the half-split left housing and the half-split right housing is located on the lower side of the bearing box. The half-split left housing is screwed to the hammer case by a left upper screw and a left lower screw. The half-split right housing is screwed to the hammer case by a right upper screw and a right lower screw. Further, the first combining screw and the second combining screw are located between the left upper screw and the left lower screw, and also between the right upper screw and the right lower screw.

According to the electric impact tool described above, since the first combining screw and the second combining screw are located between the upper left and right screws and the lower left and right screws, a length of protuberance of the first combining screw and the second combining screw can be reduced in the lateral direction. The size of the entire electric impact tool can be reduced in the lateral direction, while the power transmission mechanism can be screwed to the front side of the motor housing.

Further, an electric impact tool according to another aspect includes
a drive motor, a housing, a handle that is formed in the housing, a hammer case that is fixedly connected to a front side of the housing, a bearing box that is located on a rear side of the hammer case, a hammer which receives a rotary drive force from the drive motor and is housed in the hammer case, and an anvil which is hammered by the hammer in a rotational direction and which protrudes forward from a front end of the hammer case. Further, the bearing box includes an exposed portion which is exposed outward and which is connected to a rear side of the hammer case. Further, a cover is provided to cover the exposed portion and a part of the outer circumference of the hammer case.

According to the electric impact tool described above, a cover is provided to cover a part of the outer circumference of the hammer case and the exposed portion. Thus, even when the part of the outer circumference of the hammer case or the exposed portion happen to bump against a workpiece, the cover can prevent the workpiece from being damaged.

### BRIEF DESCRIPTION OF THE DRAWINGS

FIG. 1 is a perspective, external view showing an impact driver when viewed from a right upper side.
FIG. 2 is a right side view showing the impact driver when viewed from the right side.
FIG. 3 is a top view showing the impact driver when viewed from the top.
FIG. 4 is a front view showing the impact driver when viewed from the front side.
FIG. 5 is a rear view showing the impact driver when viewed from the rear side.
FIG. 6 is a perspective, external view showing the impact driver from which a cover has been removed.
FIG. 7 is a cross-sectional view of the impact driver that is half divided into the left and the right.
FIG. 8 is an enlarged view of a motor drive unit shown in FIG. 7.
FIG. 9 is an enlarged view of a drive conversion mechanism shown in FIG. 7.
FIG. 10 is a cross-sectional view taken along line X-X of FIG. 2.

### DESCRIPTION OF THE PREFERRED EMBODIMENTS

Each of the additional features and teachings disclosed above and below may be utilized separately or in conjunction with other features and teachings to provide an electric power tool. Representative examples of the present teaching, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings.

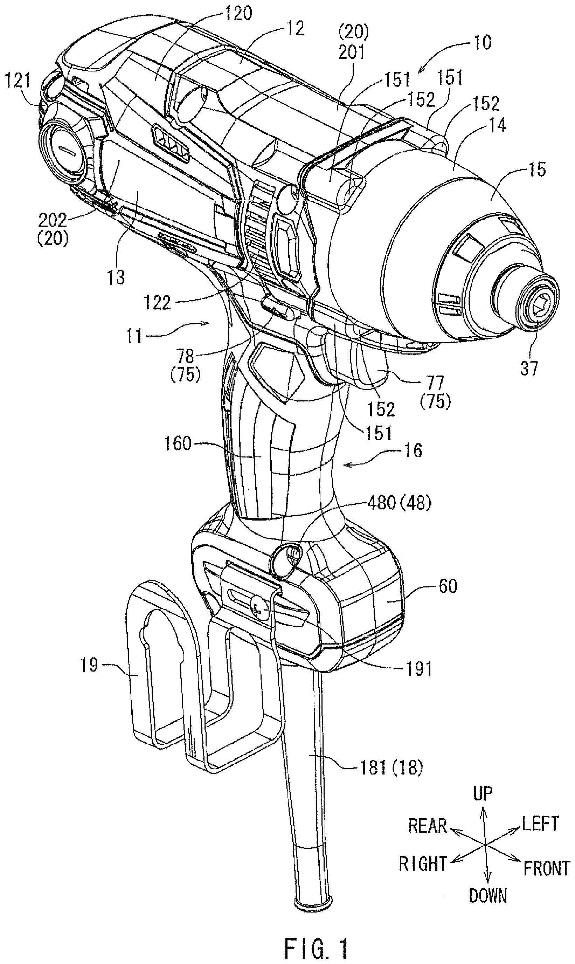

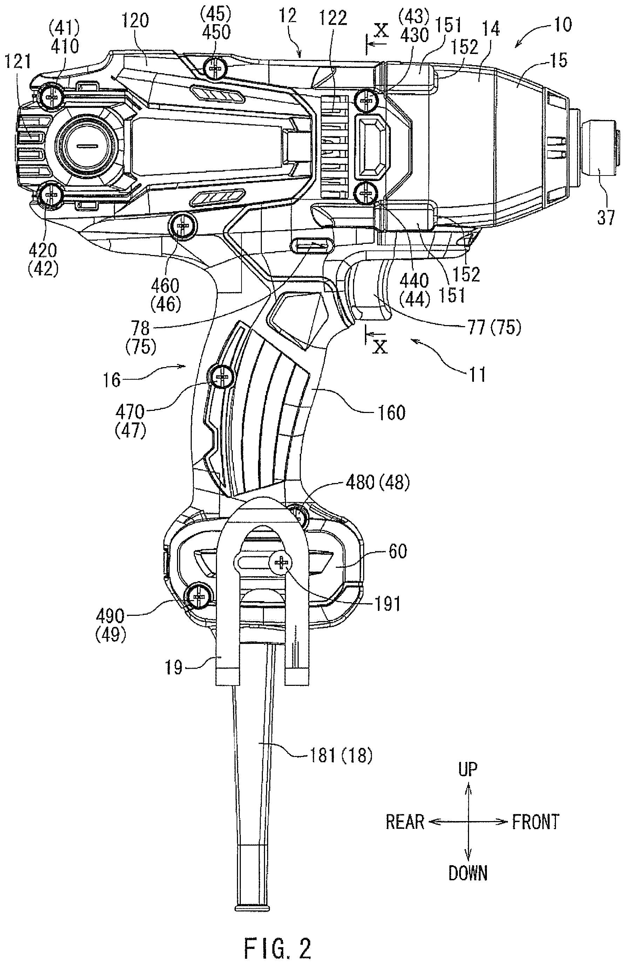

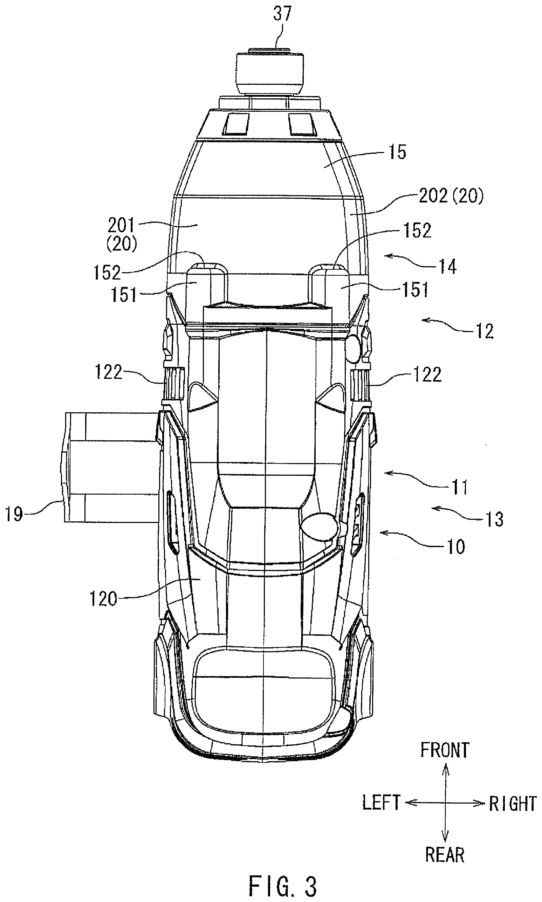

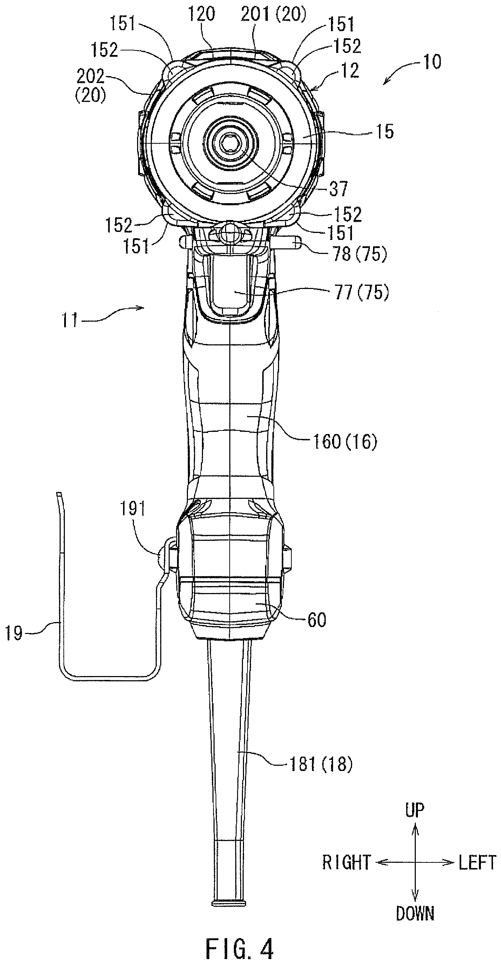

An embodiment of an electric power tool will be
described below. An impact driver 10 shown in FIGS. 1 to 9 corresponds to an electric power tool. The impact driver 10 also corresponds to an electric rotary tool.

The front side, the rear side, the upper side, the lower side, the left side, and the right side of the impact driver 10 are defined in the following description on the basis of the normal use situation of the impact driver 10. That is, the front side, the rear side, the upper side, the lower side, the left side, and the right side of the impact driver 10 are defined by the directions shown in the drawings. Specifically, a direction of the impact driver, which is directed to a workpiece, is defined as the front side in consideration of the normal use situation of the impact driver 10. Further, the side opposite thereto is defined as the rear side of the impact driver 10. Furthermore, the upper side, the lower side, the left side, and the right side are defined on the assumption that the impact driver 10 is held by a user in the same manner as a pistol.

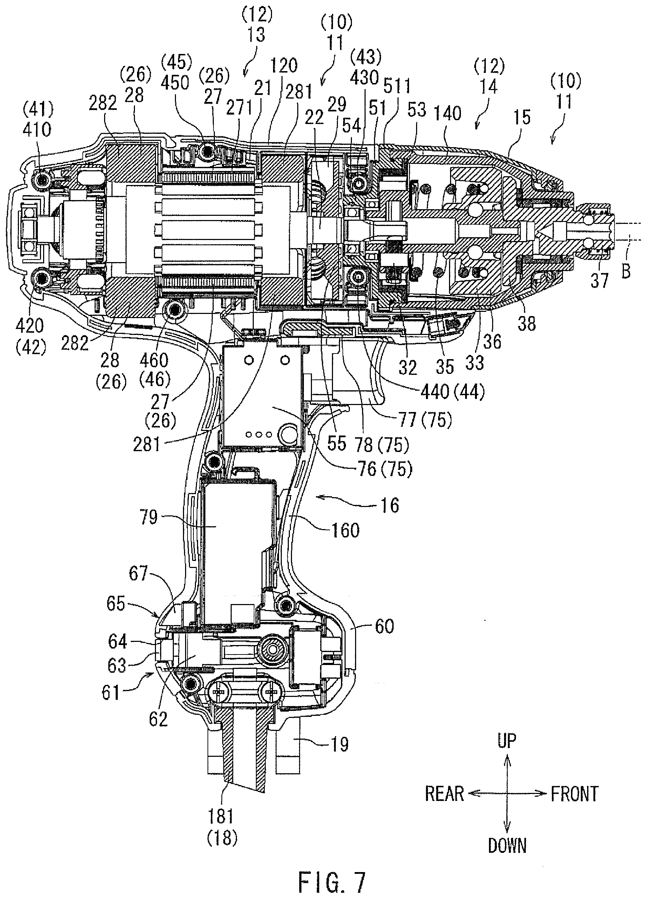

As shown in FIGS. 1 to 6, the impact driver 10 includes a tool body 11, an electric cord 18, and a hook 19. Further, the tool body 11 includes a drive structure 12 and a grip 16. The drive structure 12 and the grip 16 are located in a manner such that the tool body 11 imitates a pistol. As shown in FIG. 7, the drive structure 12 includes a motor drive unit 13 and a drive conversion mechanism section 14. The motor drive unit 13 is provided with an electric motor 21 as a drive source and is configured to generate rotational drive force. The grip 16 corresponds to a handle. Further, the drive conversion
mechanism section 14 corresponds to a drive conversion mechanism.
Furthermore, the electric motor 21 also corresponds to a drive motor.

The electric motor 21 generates drive force by converting electric power into rotational drive force. Electric power, which is converted into drive force, is supplied via the electric cord 18 from an AC power supply (alternating-current power supply) such as a household power supply. As shown in FIG. 1, the electric cord 18 extends outward from the lower end of a grip end portion 60. The impact driver 10 works as an electric power tool by converting the electric power, supplied from the AC power supply, into rotational drive force given by the electric motor 21.

The motor drive unit 13 includes a housing 20, an electric motor 21, and a cooling fan 29. The housing 20 of the motor drive unit 13 has a shape similar to the outer covering of the tool body 11. That is, the housing 20 is configured to have a housing structure in which the electric motor 21 and the cooling fan 29 can be mounted and also to have a grip structure of the grip 16. For this purpose, the housing 20 includes a motor housing 120 that forms the housing of the motor drive unit 13 and a grip housing 160 that forms the grip structure of the grip 16. The housing 20 is formed of a resin-molded product that is divided into left and right sides. As shown in FIG. 1, the housing 20 is formed by combining the divided components, i.e. a left housing 201 and a right housing 202. For this reason, each of the motor housing 120 and the grip housing 160 is also formed by combining the left housing 201 and the right housing 202. The motor housing 120 and the grip housing 160 have hollow structures in which appropriate electrical components can be mounted. The housing 20 corresponds to a combined housing.

The motor housing 120 is formed in a hollow shape and a substantially bottomed cylindrical shape so as to extend in a longitudinal direction. As shown in FIG. 7, the electric motor 21 and the cooling fan 29 are mounted in the motor housing 120. The motor housing 120 is provided with vent holes 121 and 122 through which air for cooling the motor is sucked from the outside of the motor housing 120 into the inside of the motor housing 120 and exhausted to the outside of the motor housing 120 by the cooling fan 29. That is, external air is sucked into the motor housing 120 through the suction-side vent hole 121 by the cooling fan 29. Next, the air used for cooling the motor is exhausted to the outside of the motor housing 120 through the exhaust-side vent hole 122 by the cooling fan 29.

The electric motor 21 is formed of a so-called brush motor. Specifically, the electric motor 21 includes a motor shaft 22, a rotor 23, a commutator 24, a brush 25, and a stator 26. The motor shaft 22 is rotatably supported by a rear bearing 56 provided at the rear end of the electric motor 21 and a front bearing 55 provided at the front end position of the electric motor 21. As described later, the front bearing 55 is mounted in a bearing box 51 that is supported by a gear case 140. The rear bearing 56 is fixed to the motor housing 120 in the same manner as the stator 26, which is described later. The rotor 23 is provided on the outer periphery of the motor shaft 22. The rotor 23 includes a plurality of teeth 231 around which a conducting wire is appropriately wound. The rotor 23 is rotated about the motor shaft 22 served as a rotation axis while being supported by the motor shaft 22. For this reason, the rotor 23 is rotated integrally with the motor shaft 22 while being supported by the motor shaft 22. The rotor 23 is rotated with respect to the stator 26. Further, a commutator 24 is provided at the rear portion of the rotor 23 as in a normal brush motor. Further, brushes 25 coming into contact with the commutator 24 are located at upper and lower portions on the outer periphery of the commutator 24.

The stator 26 is provided around the above-mentioned rotor 23. The stator 26 is fixed to the motor housing 120 as well as the above-mentioned bearings 56. The stator 26 serves as an electromagnet that generates magnetic flux necessary for the rotation of the rotor 23. The stator 26 includes a stator core 27 and a field coil 28. The stator core 27 corresponds to a core. The stator core 27 generates magnetic flux
by being excited by the field coil 28. The stator core 27 may be fixed to the motor housing 120. In the electric motor 21, the rotor 23 located on the inner periphery side of the stator core 27 rotates with respect to the stator core 27.

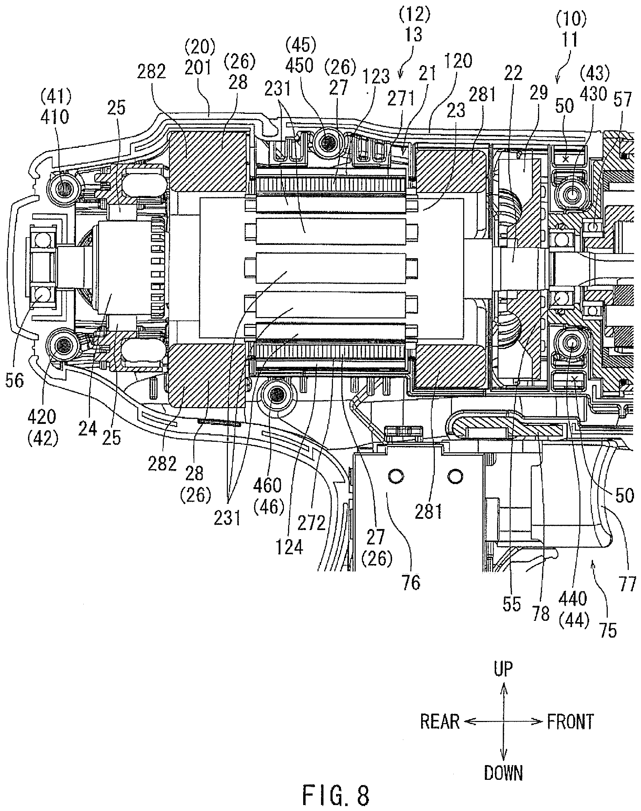

As shown in FIG. 8, an upper outer peripheral flat surface 271, which is chamfered in a planar shape, is provided above the stator core 27. Similarly, a lower outer peripheral flat surface 272, which is chamfered in a planar shape, is also provided below the stator core 27. The upper outer peripheral flat surface 271 and the lower outer peripheral flat surface 272 can limit the bulkiness of the stator core 27 in the vertical direction. A first protruding contact portion 123, which protrudes laterally, is provided on the inner peripheral surface of the motor housing 120 that faces the upper outer peripheral flat surface 271. The first protruding contact portion 123 is formed so as to have a flat surface that extends in the longitudinal and lateral directions. The first protruding contact portion 123 works to come into surface contact with the upper outer peripheral flat surface 271 and supports the upper outer peripheral flat surface 271. Further, a second protruding contact portion 124, which protrudes laterally, is also provided on the inner peripheral surface of the motor housing 120 that faces the lower outer peripheral flat surface 272. The second protruding contact portion 124 is also formed so as to have a flat surface that extends in the longitudinal and lateral directions. The second protruding contact portion 124 also works to come into surface contact with the lower outer peripheral flat surface 272 and supports the lower outer peripheral flat surface 272. In this way, the first protruding contact portion 123 and the second protruding contact portion 124 serve to prevent the rotation of the stator core 27 relative to the motor housing 120.

The field coil 28 corresponds to a coil. The field coil 28
excites the stator core 27 like a normal field coil. The field coil 28 is located on the outer periphery of the stator core 27, and is fixed to the motor housing 120. Conducting wires are wound around the field coil 28. The field coil 28 is fixed integrally with the stator core 27. The field coil 28 excites the stator core 27 by generating a magnetic field with electric power. This electric power may be supplied from an AC power supply.

The field coil 28 is formed of wound conducting wires. When exciting the stator core 27, the field coil 28 excites the stator core 27 such that magnetic poles are formed at upper and lower positions. That is, the field coil 28 is located such that magnetic poles are formed at upper and lower positions. More specifically, the field coil 28 is provided such that magnetic poles are formed on the upper outer peripheral flat surface 271 and the lower outer peripheral flat surface 272 of the stator core 27.

The field coil 28 extends in such a manner that it protrudes outward from both front and rear portions of the stator core 27. As shown in FIG. 8, the front end portion of the field coil 28 is located on the front side of the stator core 27. The field coil protrudes outward from the front portion of the stator core 27, and termed a front protruding coil portion 281. The front protruding coil portion 281 protrudes on the front side of the stator core 27, and also protrudes on the outside of the stator core 27 in a radial direction. Further, the rear end portion of the field coil 28, is located on the rear side of the stator core 27. It extends such that the field coil protrudes outward from the rear portion of the stator core 27 and is termed a rear protruding coil portion 282. The rear protruding coil portion 282 protrudes on the rear side of the stator core 27, and also protrudes from the outside of the stator core 27 in the radial direction. The rear protruding coil portion 282 is preferably formed to be larger than the front protruding coil portion 281. That is, the protruding volume of the rear protruding coil portion 282, which protrudes outward from the stator core 27, is set to be larger than that of the front protruding coil portion 281 that protrudes outward from the stator core 27.

The cooling fan 29 is mounted on the front end of the motor shaft 22 of the electric motor 21. The cooling fan 29 is in the form of a sirocco fan (centrifugal fan). The cooling fan 29 sucks air in the axial direction of the motor shaft 22 and exhausts the air in the centrifugal direction of the motor shaft 22. In more detail, the cooling fan 29 sucks external air served as cooling air into the housing 20 via the suction-side vent hole 121. It exhausts the air, which has been subjected to heat exchange, to the outside via the exhaust-side vent hole 122. The air flows from the rear portion of the housing 20 toward the front portion of the housing. Heat exchange is carried out with the electric motor 21 during the course of such flow. The exhaust-side vent hole 122 is located on the housing 20 in view of the cooling fan 29.

As shown in FIG. 7, the half-split left and right housings 201 and 202 are combined with each other by being screwed to each other at nine points. Further, in the motor housing 120, the left and right housings 201 and 202 are combined with each other by being screwed to each other at six points. Described later, the left housing 201 may be connected to the gear case 140 by fastening male screws 710 and 720 at a left upper screw-fastening portion 71 and a left lower screw-fastening portion 72. Further, the right housing 202 is connected to the gear case 140 by fastening male screws 730 and 740 at a right upper screw fastening portion 73 and a right lower screw-fastening portion 74.

The six points at which the screwing is made in the motor housing 120 are set in the following manner. A rear portion of the motor housing 120 is screwed by male screws 410 and 420 at two points, i.e. at rear screw fastening portions 41 and 42. The rear screw fastening portions 41 and 42 are located at the motor housing 120 near a position at which the rear bearing 56 is supported. The rear screw fastening portions 41 and 42 are located at positions symmetrical to each other with respect to the motor shaft 22. Further, a front portion of the motor housing 120 is screwed by male screws 430 and 440 at two points, i.e. at front screw fastening portions 43 and 44. The front screw fastening portions 43 and 44 are located at the motor housing 120 near a position at which the front bearing 55 is supported. The front screw fastening portions 43 and 44 are also located at positions that are symmetrical to each other with respect to the motor shaft 22.

Further, a middle portion of the motor housing 120 is screwed by male screws 450 and 460 at two points, i.e. at middle screw fastening portions 45 and 46. The two middle screw fastening portions 45 and 46 are located between the above-mentioned front and rear protruding coil portions 281 and 282. That is, the two middle screw fastening portions 45 and 46 are located on the outer periphery side of the above-mentioned stator core 27.

As described above, the first middle screw-fastening portion 45 is located above the stator core 27. The first middle screw-fastening portion 45 is located so as to face the chamfered upper outer peripheral flat surface 271 of the stator core 27. In other words, the first middle screw-fastening portion 45 is located above the first protruding contact portion 123. The position of the first middle screw-fastening portion 45 relative to the stator core 27 in the longitudinal direction corresponds to a substantially middle position of the stator core 27. The first middle screw-fastening portion 45 is located on the upper side such that it is appropriately separated from the first protruding contact portion 123. For this reason, an appropriate space remains between the first protruding contact portion 123 and the first middle screw-fastening portion 45.

Further, the second middle screw-fastening portion 46 is located below the stator core 27. The second middle screw-fastening portion 46 is located so as to face the chamfered lower outer peripheral flat surface 272 of the stator core 27. In other words, the second middle screw-fastening portion 46 is located below the second protruding contact portion 124. The position of the second middle screw-fastening portion 46 relative to the stator core 27 in the longitudinal direction is closer to the rear end side of the stator core 27. Meanwhile, the second middle screw-fastening portion 46 is located in the vicinity of the rear end of the grip end portion 60. These two middle screw-fastening portions 45 and 46 are located on the rear side of the front protruding coil portion 281. At the same time, the two middle screw-fastening portions 45 and 46 are located on the front side of the rear protruding coil portion 282. The second middle screw-fastening portion 46 is located on the lower side such that it is appropriately separated from the second protruding contact portion 124. For this reason, an appropriate space remains between the second protruding contact portion 124 and the second middle screw-fastening portion 46.

Next, with regard to the grip housing 160, the left and right housings 201 and 202 are combined with each other by being screwed to each other at three points, and the combined state is maintained. The three points at which the screwing is made in the grip housing 160 are set in the following manner. An upper screw-fastening portion 47 is located in the vicinity of an operation trigger 77 in the grip 16 that is held by a user. The upper screw-fastening portion 47 is screwed by a male screw 470. An intermediate screw-fastening portion 48 is located at an upper portion of the grip end portion 60. The intermediate screw-fastening portion 48 is screwed by a male screw 480. A lower screw-fastening portion 49 is located at a lower portion of the grip end portion 60. The lower screw-fastening portion 49 is screwed by a male screw 490.

The male screws 410 to 490 are located in the above-mentioned respective screw fastening portions 41 to 49 along a direction in which the left and right housings 201 and 202 are combined with each other. In this way, the motor housing 120 is fixed by screws at the six points; at the rear screw fastening portions 41 and 42, the front screw fastening portions 43 and 44, and the middle screw fastening portions 45 and 46. In addition, the grip housing 160 is screw-fixed at three points; at the upper screw-fastening portion 47, the upper screw-fastening portion 48, and the upper screw-fastening portion 49. Accordingly, the left and right housings 201 and 202 are combined with each other and form the housing 20.

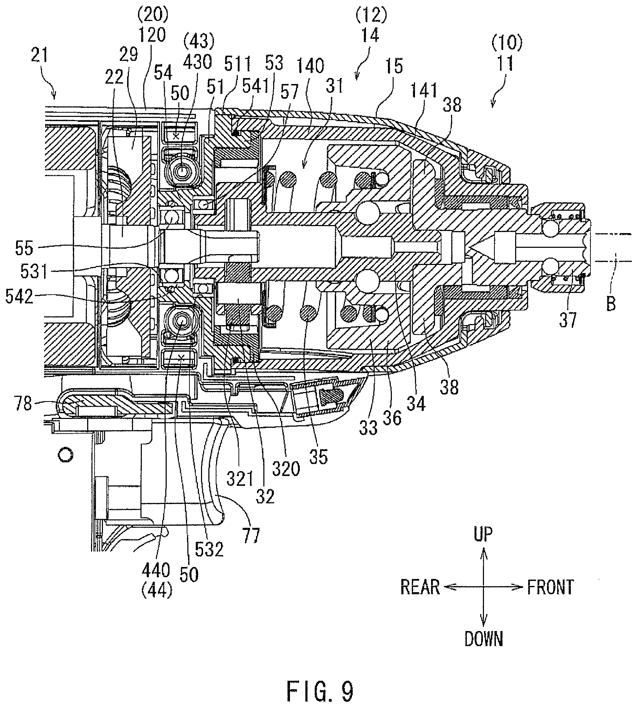

As shown in FIG. 9, the drive conversion mechanism section 14 includes a mechanism that converts the rotational drive force of the motor shaft 22 of the electric motor 21. In more detail, the drive conversion mechanism section 14 includes the gear case 140 and a power transmission mechanism section 31. The gear case 140 forms an outer covering of the drive conversion mechanism section 14, and is located on the front side of the motor housing 120. The power transmission mechanism section 31 is mounted in the gear case 140. The gear case 140 is integrally combined with the housing 20 on the front side of the motor housing 120. Further, an anvil 37, which forms an output shaft from the power transmission mechanism section 31, protrudes forward from the front end of the gear case 140. The gear case 140 corresponds to a front case, and also corresponds to a
hammer case. The anvil 37 corresponds to an output shaft.

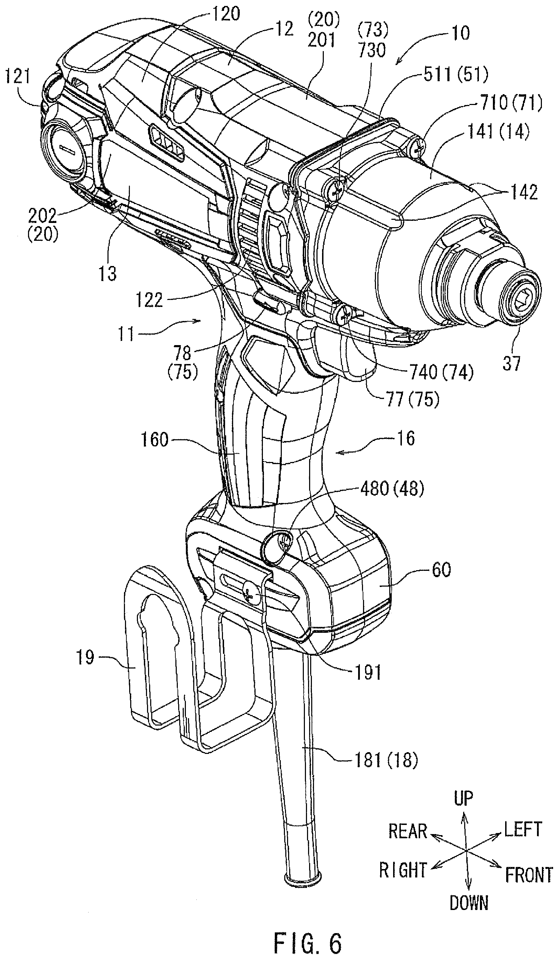

As can be seen from FIG. 1 and FIG. 6, a cover 15 made of a resin is assembled on the outer peripheral surface of the gear case 140. The cover 15 is located so as to cover an outer peripheral surface 141 of the gear case 140 and prevents the gear case 140 from being exposed to the outside. As shown in FIG. 6, the cover 15 is provided such that the cover 15 covers the outer peripheral surface 141 of the gear case 140 and also covers an externally exposed portion 511 of a bearing box 51, which is described later. Meanwhile, when the cover 15 is removed, the screw fastening portions 71, 72, 73, and 74 (not shown) of the gear case 140 are exposed to the outside. The male screws 710, 720, 730, and 740 (not shown) are located in these screw-fastening portions 71, 72, 73, and 74. Further, notched grooves 142 for the fastening of screws are formed on the outer peripheral surface 141 of the gear case 140 in front of these screw-fastening portions 71, 72, 73, and 74. Spaces in which a screwdriver is put when the male screws 710, 720, 730, and 740 are fastened to the screw fastening portions 71, 72, 73, and 74 are obtained by the notched grooves 142.

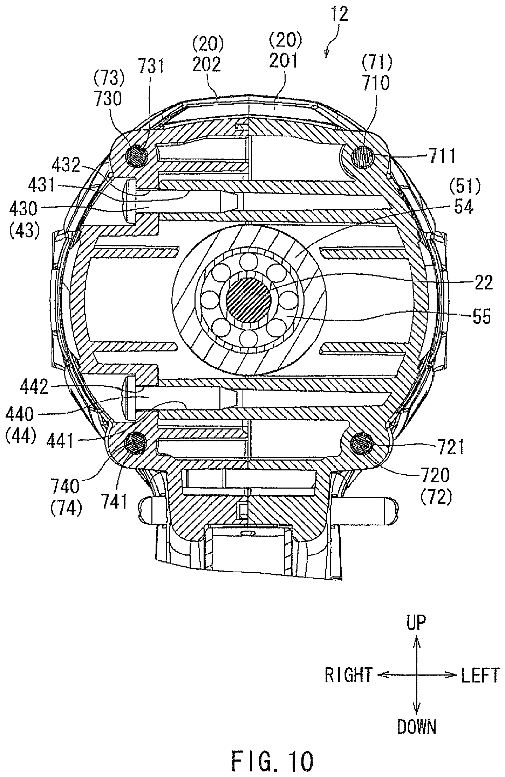

The cover 15 made of a resin has a shape that corresponds to the protruding shapes of the screw fastening portions 71, 72, 73, and 74 of the gear case 140. Specifically, the screw fastening portions 71, 72, 73, and 74 are formed so as to protrude in the radial direction of the anvil 37, i.e. outward, as shown in FIG. 10. That is, as shown in FIG. 1, the cover 15 made of a resin has bulge-shaped portions 151 that cover the screw fastening portions 71, 72, 73, and 74. Further, front surfaces 152 of the bulge-shaped portions 151 of the cover 15 are made of a resin and formed to be nearly flat and to face a workpiece. They extend in the vertical and lateral directions. Accordingly, even when these bulge-shaped portions 151 are hit against, for example, a workpiece, impact can be efficiently absorbed by the front surfaces 152. In this way, the screw fastening portions 71, 72, 73, and 74 can be advantageously protected against an accidental hit.

The following is explained by reference to FIG. 9. The power transmission mechanism section 31, which is mounted in the gear case 140, receives rotational drive force from the electric motor 21. After receiving such rotational drive force, the power transmission mechanism section 31 transmits the rotational drive force to the anvil 37. The anvil 37 protrudes forward from the front end of the gear case 140. The power transmission mechanism section 31 includes a planetary gear mechanism 32, an impact mechanism 33, and the anvil 37. The planetary gear mechanism 32 includes a gear train that decelerates the rotational drive force of the electric motor 21. The planetary gear mechanism 32 is formed by mounting a planetary gear train 321 in an internal gear 320. The impact mechanism 33 includes an intermediate shaft 34, a bias spring 35, and a hammer 36. The intermediate shaft 34 is rotatably supported by an intermediate shaft bearing 57. The intermediate shaft 34 receives the rotational drive force that is transmitted through the planetary gear mechanism 32, and then rotates. The bias spring 35 urges the hammer 36 to bias towards the front side. The hammer 36 strikes an impact piece 38 that is integrally connected to the anvil 37. The anvil 37 is provided with a chuck mechanism to which a screwdriver bit B can be attached. The screwdriver bit B corresponds to a tip tool. The anvil 37 of
the impact mechanism 33 may receive an external torque (screw tightening resistance), equal to or larger than a set torque through the screwdriver bit B during tightening of a screw. If this occurs, the hammer 36 is rotated while moving forward and rearward relative to the intermediate shaft 34 in the axial direction. Then, the hammer 36 strikes the impact piece 38 in the rotational direction, and outputs a large screw tightening torque to the anvil 37 integrally connected to the impact piece 38.

The following is also explained by reference to FIG. 9. The bearing box 51 is provided at the rear portion of the above-mentioned drive conversion mechanism section 14. The bearing box 51 is provided so as to be linked to the rear portion of the gear case 140. The bearing box 51 includes a support case 52, the front bearing 55, and the intermediate shaft bearing 57. The support case 52 includes a supported overhang portion 53 and a bearing holding portion 54. The supported overhang portion 53 is interposed between and supported by the internal gear 320 of the above-mentioned planetary gear mechanism 32 and the gear case 140 of the drive conversion mechanism section 14. That is, the supported overhang portion 53 is located on the inner periphery of the gear case 140 while being located on the outer periphery of the internal gear 320. The supported overhang portion 53 is supported while being interposed therebetween. An O-ring 541 is inserted between the supported overhang portion 53 and the gear case 140.

The bearing holding portion 54 is formed integrally with the supported overhang portion 53 so as to protrude rearward from the above-mentioned supported overhang portion 53. That is, the bearing holding portion 54 protrudes rearward from the rear portion of the gear case 140 such that the supported overhang portion 53 is supported by the gear case 140. The bearing holding portion 54 holds the above-mentioned front bearing 55 and the intermediate shaft bearing 57. Further, a first support recess 531 into which the front bearing 55 can be fitted is formed at the rear portion of the bearing holding portion 54 so as to be capable of supporting the front bearing 55. The front bearing 55 is supported by the first support recess 531 and supports the above-mentioned motor shaft 22. An O-ring 542 is inserted between the first support recess 531 and the front bearing 55. Next, a second support recess 532 into which the intermediate shaft bearing 57 can be fitted is formed at the front portion of the bearing holding portion 54 so as to be capable of supporting the intermediate shaft bearing 57. The second support recess 532 is located adjacent to the front side of the above-mentioned first support recess 531. The intermediate shaft bearing 57 is supported by the second support recess 532 and supports the above-mentioned intermediate shaft 34. Meanwhile, an externally exposed portion 511, which is exposed to the outside on the rear side of the gear case 140, together with the outer peripheral surface of the gear case 140, is formed on the outer peripheral surface of the bearing box 51.

As shown in FIG. 6, the left and right housings 201 and 202 are screwed to the gear case 140. That is, the left housing 201 is screwed to the gear case 140 at the left upper screw-fastening portion 73 and the left lower screw-fastening portion 74. These portions are positioned so as to be separated from each other in the vertical direction. The male screws 710 and 720 are located at the left upper screw fastening portion 71 and the left lower screw-fastening portion 72 along the extending direction of the gear case 140 such that the left housing 201 and the gear case 140 are screwed to each other. That is, at the left upper screw-fastening portion 71 and the left lower screw fastening portion 72 the gear case 140 is connected to the motor housing 120 by the male screws 710 and 720. As shown in FIG. 10, female screw portions 711 and 721 to which the male screws 710 and 720 are fastened are formed in the motor housing 120.

Similar to the left housing 201, the right housing 202 is screwed to the gear case 140 at the right upper screw fastening portion 73 and the right lower screw fastening portion 74. These portions are positioned so as to be separated from each other in the vertical direction. The male screws 730 and 740 are located at the right upper screw fastening portion 73 and the right lower screw-fastening portion 74 along the extending direction of the gear case 140 such that the right housing 202 and the gear case 140 are screwed to each other. That is, at the right upper screw fastening-portion 73 and the right lower screw-fastening portion 74 the gear case 140 is connected to the motor housing 120 by the male screws 730 and 740. As shown in FIG. 10, female screw portions 731 and 741 to which the male screws 730 and 740 are fastened are formed in the motor housing 120.

As shown in FIG. 10, the two male screws 430 and 440, which are located at the two front screw fastening portions 43 and 44 respectively, correspond to a first combining screw and a second combining screw. That is, the first front screw fastening portion 43 corresponding to the first combining screw is located above a position at which the bearing holding portion 54 of the bearing box 51 is located. The first front screw-fastening portion 43 is located below positions at which the left upper screw-fastening portion 71 (male screw 710) and the right upper screw-fastening portion 73 (male screw 730) are located. Meanwhile, the male screw 430 of the first front screw-fastening portion 43 is engaged with a female screw 431 of the left housing 201 and a female screw 432 of the right housing 202.

In contrast, the second front screw fastening portion 44 corresponding to a second combining screw is located below a position at which the bearing holding portion 54 of the bearing box 51 is located. The second front screw-fastening portion 44 is located above positions at which the left lower screw-fastening portion 72 (male screw 720) and the right lower screw fastening portion 74 (male screw 740) are located. The male screw 440 of the second front screw-fastening portion 44 is engaged with a female screw 441 of the left housing 201 and a female screw 442 of the right housing 202.

As shown in FIGS. 8 and 9, a damping space 50 is formed on the rear side of the supported overhang portion 53 of the bearing box 51 and on the outer peripheries of the two front screw fastening portions 43 and 44. The damping space 50 has an effect of damping vibration generated in the above-mentioned power transmission mechanism section 31 that may be transmitted to the grip 16. That is, when a user holds the grip 16 of the impact driver 10 with a hand, vibration to be transmitted to the grip 16 can be damped. Accordingly, the usability of the impact driver 10 can be improved.

The grip 16 is provided below the above-mentioned drive structure 12. The grip 16 is formed by the grip housing 160 that is formed integrally with the motor housing 120. The grip housing 160 is also termed a handle housing, and is formed similar to a pistol grip such that a user can hold it. In more detail, the grip housing 160 is formed so as to extend downward from the lower portion of the motor housing 120. The grip end portion 60, which bulges just like, for example, a grip end of a baseball bat, is formed at the lower portion of the grip 16. The grip end portion 60 is formed as a part of the grip housing 160 so as to form the lower portion of the grip housing 160. The grip end portion 60 is formed substantially in a box shape such that the cross-sectional area of the grip end portion 60 in the longitudinal direction and the lateral direction is larger than the cross-sectional area of the grip housing 160 of the grip 16 in the longitudinal direction and the lateral direction. The electric cord 18 is provided at the lower portion of the grip end portion 60, and it extends outward from the lower portion of the grip end portion 60. A reference numeral 181 in the drawings shows a guide member that covers the electric cord 18. The hook 19 for hooking is attached to the right side surface of the grip end portion 60 by use of a screw 191. The hook 19 can be removed from the tool body 11 by loosening the screw 191.

As shown in FIG. 7, a drive switch 75 is provided at the upper portion of the grip 16. The drive switch 75 includes a switch main body 76, an operation trigger 77, and a rotation direction switching button 78. The switch main body 76 is mounted in the grip housing 160 together with a controller 79. The switch main body 76 is configured to send input signals to the controller 79 according to the inputs from the operation trigger 77 and the rotation direction switching button 78. The controller 79 is configured to supply electric power to the electric motor 21 on the basis of the input signals from the switch body 76 in addition to another input signals from a speed mode switch 61 that is described later. The operation trigger 77 is configured to be capable of being operated when a user pulls the operation trigger by a finger while holding the grip 16. Further, the operation trigger 77 is provided so as to be slidable relative to the grip 16 in the longitudinal direction. The rotation direction switching button 78 is provided so as to be slidable relative to the grip 16 in the lateral direction. When the rotation direction switching button 78 is pushed from the right side, data showing a normal direction (clockwise direction) is input. When the rotation direction switching button 78 is pushed from the left side, data showing a reverse direction (counterclockwise direction) is input.

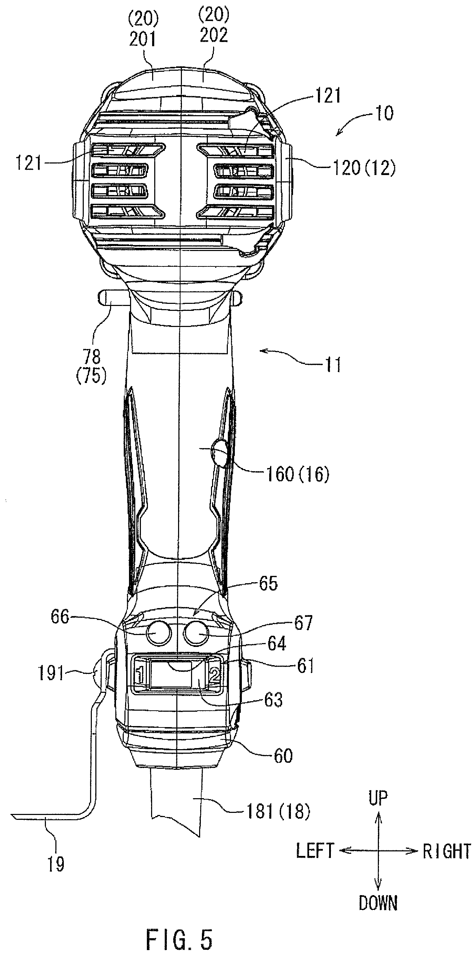

As shown in FIG. 5, a speed mode switch 61 and an LED (light emitting diode) indicator 65 are provided on the rear surface of the grip end portion 60 located in the lower portion of the grip housing 160. The LED indicator 65 corresponds to an indicator.
Both the speed mode switch 61 and the LED indicator 65 are
provided on the rear surface of the grip end portion 60, lining up in the vertical direction.

The speed mode switch 61 is constructed in a manner such that a user can operate it arbitrarily. That is, the user can select the mode of the rotational speed of the electric motor 21. The speed mode switch 61 can be switched to a low-speed mode or a high-speed mode. Meanwhile, the low-speed mode is a mode in which the rotational speed is set to a low speed, and the high-speed mode is a mode in which the rotational speed is set to a high speed. As shown in FIG. 7, the speed mode switch 61 includes a mode switch main body 62 and an operation part 63. The mode switch main body 62 is provided in the grip end portion 60 and sends information about input data, which corresponds to the input of an operation part 63, to the controller 79. The operation part 63 is provided on the rear surface of the grip end portion 60. The operation part 63 can be switched to either the high-speed mode or the low-speed mode by sliding it in the lateral direction.

On the rear surface of the grip end portion 60, an opening 64 is formed by cutting a part of the rear surface of the grip housing 160. The operation part 63 is operably exposed to the outside through the opening 64 such that an operation can be input to the mode switch body 62. In detail, the opening 64 is formed by cutting the rear surface of the grip end portion 60 in a substantially rectangular shape. A numeral "1", which shows the low-speed mode, is preferably engraved on the left side edge of the opening 64. Further, a numeral "2", which shows the high-speed mode, is preferably engraved on the right side edge of the opening 64. The operation part 63, which is operably exposed to the outside through the opening 64, is formed to have a protrusion shape extending in the vertical direction such that the operation part can be slid in the lateral direction by use of a finger. A user can set the operation part 63 on the left side by sliding the operation part 63 to the left side, or can set the operation part 63 on the right side by sliding the operation part 63 to the right side by use of a finger. When the operation part 63 is located to the "1" position (engraved on the left side), the mode switch body 62 is input such that the electric motor 21 is driven at a low speed. Further, when the operation part 63 is located to the "2" position (engraved on the right side), the mode switch body 62 is input such that the electric motor 21 is driven at a high speed. Meanwhile, the mode switch body 62 sends the input signal from the operation part 63 to the above-mentioned controller 79.

As shown in FIG. 5, the LED indicator 65 includes two LED lamps 66 and 67. The two LED lamps 66 and 67 correspond to the above-mentioned speed mode switch 61 in which the two modes can be selected. That is, the two LED lamps 66 and 67 indicate the low speed and the high speed, respectively, and the two modes can be switched by sliding the speed mode switch 61. The indication of the two LED lamps 66 and 67 showing the low speed mode and the high speed mode is performed by turning on the LED lamps. The two LED lamps 66 and 67 correspond to a plurality of lights. The
colors of light emitted from the two LED lamps 66 and 67 are configured to be different from each other. Preferably, the color of light emitted from the left LED lamp 66 is red, and the color of light emitted from the right LED lamp 67 is blue. The indication of the LED indicator 65 is controlled by the controller 79 according to an input operation of the speed mode switch 61. That is, when the low speed is selected in the above-mentioned speed mode switch 61, the controller 79 turns on the left LED lamp 66 of the LED indicator 65. When the high speed is selected in the above-mentioned speed mode switch 61, the controller 79 turns on the right LED lamp 66 of the LED indicator 65.

Further, the two LED lamps 66 and 67 are configured to turn on such that it can be judged from their appearance whether electric power is being supplied to the impact driver 10. That is, either of the above-mentioned two LED lamp 66 or 67 may always be turned on when the above-mentioned electric cord 18 is connected to an AC power supply, regardless of an actuation of the operation trigger 77. Thus, when the electric cord 18 is not connected to the AC power supply, both the LED lamps 66 and 67 are not turned on.

The lighting conditions of the above-mentioned LED indicator 65 may be modified in the following manner. In the example above, the left LED lamp 66 is configured to emit red light, and the right LED lamp 67 to emit blue light. However, the colors of light to be emitted are not limited to this, and may be the same color. Further, in the example above, either the left LED lamp 66 or the right LED lamp 67 is turned on according to an input operation input from the speed mode switch 61. However, only one of the left and right LED lamps 66 and 67 may be turned, or both the left and right LED lamps 66 and 67 may be turned in accordance with actuation of the speed mode switch 61.

Further, a brightness level (luminance level) of the LED lamp 66 or 67 may be changed. That is, when the rotational speed of the electric motor 21 is changed in stages in accordance with the operation of a speed mode switch 61, the brightness (luminance) level of the light emitted from one or both of the LED lamps 66 and 67 may also be changed in stages. Further, frequencies of the LED lamps 66 and 67 may be changed according to a stepwise change of the rotational speed of the electric motor 21. Further, the colors of the light emitted from the LED lamps 66 and 67 may be changed according to a stepwise change of the rotational speed of the electric motor 21. Moreover, the colors of the light emitted from the respective LED lamps 66 and 67 may be different from each other or may be changed in combination according to a stepwise change of the rotational speed of the electric motor 21. That is, an appropriate indication form, which can be visually recognized, can be selected for the control of the LED indicator 65, and various indication forms may be utilized.

As described above, the LED lamps 66 and 67 are configured to turn on such that it can be judged whether electric power is being supplied to the impact driver 10. That is, when the electric cord 18 is not connected to the AC power supply, both the LED lamps 66 and 67 are not turned on. In contrast, when the above-mentioned electric cord 18 is connected to the AC power supply, at least one of the above-mentioned two LED lamps 66 and 67 is configured to turn on such that a user can see a turned-on lamp, regardless of whether the above-mentioned operation trigger 77 is pulled or not. The lighting of the above-mentioned LED indicator 65 (the light emission of the LED lamps 66 and 67) is controlled by the controller 79. That is, the controller 79 is configured to independently control the respective LED lamps 66 and 67 of the LED indicator 65 by giving consideration to a signal input from the drive switch 75, a signal input from the speed mode switch 61, and the electrical connection of the electric cord 18 to the AC power supply, etc.

Further, in the example above, the speed mode switch 61 and the LED indicator 65 are configured to be separate components. However, the speed mode switch 61 and the LED indicator 65 may be combined on the same circuit board. Further, the LED indicator 65 is controlled by the controller 79 that is formed of a separate component from the LED indicator 65, but the LED indicator 65 may be configured to be directly controlled from the speed mode switch 61. Further, a capacitor or a diode bridge may be mounted on such a circuit board. Additionally, a capacitor or a diode bridge may be mounted on the controller 79. Further, a circuit functioning as the above-mentioned controller 79 may be mounted on a circuit board by which the speed mode switch 61 and the LED indicator 65 are connected to each other.

According to the impact driver 10 (the electric power tool and the electric impact tool) of the above-mentioned embodiment, certain effects can be obtained. For example, the LED indicator 65 provided in the grip housing 160 can indicate either the low-speed mode or the high-speed mode of the rotational speed of the electric motor 21. The relative speed mode is selected by the speed mode switch 61. Accordingly, a user can visually confirm the rotational speed of the electric motor 21 which is set by the speed mode switch 61. Thus, a user easily and conveniently determines the rotational speed of the electric motor 21. Further, according to the above-mentioned impact driver 10, since the LED indicator 65 indicates whether or not electric power is being supplied to the impact driver 10, a user can visually confirm whether or not electric power is being supplied to the impact driver 10. Thus, a user easily and conveniently determines whether or not the impact driver 10 is connected to the AC power supply. Further, according to the impact driver 10, the LED indicator 65, which indicates the rotational speed of the electric motor 21, also functions as a power supply lamp showing whether the impact driver is connected to the AC power supply. Accordingly, the functions of both the LED indicator 65 and the power supply lamp can be incorporated in one device, which can reduce manufacturing cost. Moreover, according to the above-mentioned impact driver 10, since the LED indicator 65 indicates by the emission of light from the LED lamps 66 and 67, a user can easily determine whether or not the lamp is turned on and can advantageously make a visual confirmation. Further, according to the above-mentioned impact driver 10, the LED indicator 65 includes two lamps, that is, the left and right LED lamps 66 and 67. The rotational speed of the electric motor 21, which is set by the speed mode switch 61, can be changed in stages, and indication by light emission is controlled such that the frequencies of the lighting of the LED lamps 66 and 67 can vary according to the rotational speed of the electric motor 21. In this case, a user can make a visual confirmation by seeing the frequencies of the lighting of the LED lamps 66 and 67, and can easily find the rotational speed of the electric motor 21. Further, according to the above-mentioned impact driver 10, indication by light emission has a difference in color. Therefore, the rotational speed of the electric motor 21, which is set by the speed mode switch 61, can be changed in stages, and indication by light emission can be controlled such that light having different colors is emitted according to the rotational speed of the electric motor 21. In this case, a user can make a visual confirmation by seeing the colors of the LED lamps 66 and 67. Accordingly, a user can conveniently find the rotational speed of the electric motor 21 that is set by the speed mode switch 61. Moreover, according to the above-mentioned impact driver 10, indication by light emission can have a difference in brightness. Therefore, the rotational speed of the electric motor 21, which is set by the speed mode switch 61, can be changed in stages, and indication by light emission can be controlled such that light having a different brightness is emitted according to the rotational speed of the electric motor 21. In this case, a user can find the rotational speed of the electric motor 21, which is set by the speed mode switch 61, by visually confirming the brightness of the LED lamps 66 and 67. Thus, a user can easily and conveniently determine the rotational speed of the electric motor 21.

According to the above-mentioned impact driver 10, when the speed mode switch 61 and the LED indicator 65 are connected to the same circuit board, simultaneous control of both the control of the electric motor 21 and the LED indicator 65 can be easily and efficiently made using the input from the speed mode switch 61. Further, according to the above-mentioned impact driver 10, when a capacitor, a diode bridge and/or controller may be mounted on the circuit board. Moreover, according to the above-mentioned impact driver 10, the LED indicator 65 provided in either the motor housing 120 or the grip housing 160 can indicate one of the two-stage rotational speeds, i.e. the low-speed mode or the high-speed mode. The mode corresponds to the rotational speed of the electric motor 21 set by the speed mode switch 61. Accordingly, a user can visually confirm the rotational speed of the electric motor 21 set by the speed mode switch 61. Thus, a user can easily and conveniently find the rotational speed of the electric motor 21. Further, according to the above-mentioned impact driver 10, since the LED indicator 65 indicates whether or not electric power is being supplied to the impact driver 10, a user can visually confirm whether or not electric power is being supplied to the impact driver 10. Thus, a user can easily and conveniently confirm whether or not the impact driver 10 is connected to the AC power supply. Further, according to the impact driver 10, the LED indicator 65, which indicates the rotational speed of the electric motor 21, also functions as a power supply lamp showing whether the impact driver is connected to the AC power supply. Accordingly, the functions of both the LED indicator 65 and the power supply lamp can be incorporated in one device, and manufacturing cost can be reduced. Moreover, according to the above-mentioned impact driver 10, since the LED indicator 65 is provided on the rear surface of the grip end portion 60, a user can visually confirm the LED indicator 65 showing the rotational speed of the electric motor 21 by just holding the impact driver 10. In this way, a visual confirmation can be advantageously made when a user uses the impact driver 10. Further, according to the above-mentioned impact driver 10, since the speed mode switch 61 is provided on the same surface as the LED indicator 65, a user can visually confirm the indication of the LED indicator 65 after the operation of the speed mode switch 61 is made. Accordingly, a visual confirmation can be advantageously made when a user operates the speed mode switch 61.

Further, according to the above-mentioned impact driver 10, since the positions of the middle screw fastening portions 45 and 46, are located between the front protruding coil portion 281 and the rear protruding coil portion 282 when the left housing 201 and the right housing 202 are fixed to each other by screws , it is possible to effectively utilize a dead space that is likely to be formed between the front protruding coil portion 281 and the rear protruding coil portion 282. Accordingly, it is possible to reduce the size of the motor housing 120 by effectively utilizing a dead space that is likely to be formed in the motor housing 120, while a sufficient number of turns in a coil is maintained such that a rotational drive force generated by a drive motor can be sufficiently obtained. In this way, the size of the impact driver 10 can be reduced. Moreover, the protruding coil portions 281 and 282 may be located on at least one of the front and rear sides of the positions of the middle screw fastening portions 45 and 46 when the left housing 201 and the right housing 202 are fixed to each other by screws. In this way, it is possible to dispose the protruding coil portions 281 and 282 in a dead space that is formed due to the positions of the middle screw fastening portions 45 and 46 when the left housing and the right housing are fixed to each other by screws. Further, according to the above-mentioned impact driver 10, the first middle screw fastening portion 45 is located on the upper side such that it is appropriately separated from the first protruding contact portion 123, and the second middle screw fastening portion 46 is located on the lower side such that it is appropriately separated from the second protruding contact portion 124. Accordingly, even when the impact driver 10 is dropped and receives an impact from the ground, a collision force from the stator core 27 is received and supported by the first protruding contact portion 123 and the second protruding contact portion 124. That is, the first protruding contact portion 123 and the second protruding contact portion 124 not only work to prevent the rotation of the stator 26 relative to the motor housing 120 but also work to receive the collision force of the stator 26. Since the stator 26 receiving the collision force is supported by the first protruding contact portion 123 and the second protruding contact portion 124. In this way, when the impact driver 10 is dropped and receives an impact from the ground, the stator 26 does not interfere with the the middle screw fastening portions 45 and 46. Accordingly, it is possible to protect the two portions of the middle screw fastening portions 45 and 46 from being damaged. Further, according to the above-mentioned impact driver 10, since the rear protruding coil portion 282 protruding on the rear side of the stator core 27 is formed to be larger than the front protruding coil portion 281 protruding on the front side of the stator core 27, it is possible to reduce the size of a portion in which the front protruding coil portion 281 is located, while a sufficient number of turns in a coil is maintained such that a rotational drive force generated by a drive motor can be sufficiently obtained. Accordingly, a front-side structure, in which the front protruding coil portion 281 is located, can be made slim such that the impact driver 10 can be easily handled.

Moreover, according to the above-mentioned impact driver 10, the first and second front screw fastening portions 43 and 44 are located without interfering with the bearing box 51. Further, the first and second front screw fastening portions 43 and 44, which are located in the vicinity of the bearing box 51, are located below the left and right upper screw fastening portions 71 and 73, and also located above the left and right lower screw fastening portions 72 and 74. Since the left and right upper screw fastening portions 71 and 73 are located above the first and second front screw fastening portions 43 and 44, a length of protuberance of the left and right upper screw fastening portions 71 and 73 in the lateral direction can be reduced. Further, since the left and right lower screw fastening portions 72 and 74 are located below the first and second front screw fastening portions 43 and 44, a length of protuberance of the left and right lower screw fastening portions 72 and 74 in the lateral direction can be reduced. That is, according to the above-mentioned impact driver 10, it is possible to screw the gear case 140 including the power transmission mechanism section 31 to the front end portion of the motor housing 120 and also to reduce the length of the entire impact driver 10 in the lateral direction. This includes the power transmission mechanism section 31 screwed as described above. Further, according to the above-mentioned impact driver 10, the first and second front screw fastening portions 43 and 44 are located between the left and right upper screw fastening portions 71 and 73 and the left and right lower screw fastening portions 72 and 74. For this reason, it is possible to reduce a length of protuberance of the first and second front screw fastening portions 43 and 44 in the lateral direction. Accordingly, it is possible to screw the gear case 140 including the power transmission mechanism section 31 to the front end portion of the motor housing 120 and also to reduce the length of the entire impact driver 10 in the lateral direction. Further, according to the above-mentioned impact driver 10, the cover 15 is provided so as to cover the outer peripheral surface 141 of the gear case 140 and the externally exposed portion 511 of the bearing box 51. In this way, it is possible to cover the outer peripheral surface 141 of the gear case 140 and the externally exposed portion 511 of the bearing box 51 by use of the cover 15. Accordingly, even when the impact driver 10 happens to bump against a workpiece, the cover 15 can protect the workpiece from damage by the outer peripheral surface 141 of the gear case 140 and the externally exposed portion 511 of the bearing box 51.

Moreover, the front portion of the bearing box 51 mounted in the gear case 140 protrudes from the front end of the motor housing 120. Accordingly, heat accumulated in the bearing box 51 can be easily transferred to the gear case 140. The externally exposed portion 511 of the front portion of the bearing box 51 protrudes from the front end of the motor housing 120, and it is covered with the above-mentioned cover 15 made of a resin. Accordingly, it is possible to release heat, which is accumulated in the bearing box 51, to the front side of the gear case 140 without transferring the heat to the exposed peripheral surface of the drive structure 12.

The electric power tool and the electric impact tool are not
limited to the structure of the impact driver 10 of the above-mentioned embodiment, and may be appropriately modified. That is, in the above-mentioned embodiment, an electric impact tool, such as an impact driver, has been described as an example of the electric power tool. However, the electric power tool and the electric impact tool
are not limited to an example of the impact driver 10 and may be
applied to an electric power tool and an impact tool that are configured to use an electric motor as a drive source.

Further, in the above-mentioned embodiment, the two-stage modes, that is, the low-speed mode and the high-speed mode are used, can be switched by the speed mode switch 61 (speed change switch). However, the switching performed by the speed change switch may be performed in three or four stages. Further, the
switching performed by the speed change switch is not limited to stepwise switching, and also includes continuously smooth switching.

Further, in the above-mentioned embodiment, an indicator showing the rotational speed may be part of the LED indicator 65. The indicator is not
limited to this example. A display device using a liquid crystal display can also be used. Further, the location of the speed mode switch 61 and the LED indicator 65 is not limited to the rear surface of the above-mentioned grip end portion 60 and they may be located at any other portions of the housing 20.

Further, the grip end portion 60 of the above-mentioned embodiment is formed substantially in a box shape so as to have an area where the cross-sectional area of the grip end portion 60 in the longitudinal direction and the lateral direction is larger than the cross-sectional area of the grip 16 in the longitudinal direction and the lateral direction.
However, the grip end portion is not limited to this example, and
may be formed so as to have the same cross-sectional area as that of the grip 16. However, when the grip end portion 60 is formed as in the above-mentioned embodiment, it is possible to improve the usability in holding the grip, and thus an easily-handled electric power tool can be obtained.

Further, in the above-mentioned embodiment, an upper outer peripheral flat surface 271 chamfered in a planar shape is provided above the stator core 27. The lower outer peripheral flat surface 272 chamfered in a planar shape is also provided below the stator core 27. However, the stator core is not limited to this example, and an
appropriate shape may be used instead of the shape of the outer peripheral flat surfaces chamfered in a planar shape. Meanwhile, when the upper outer peripheral flat surface 271 and the lower outer peripheral flat surface 272 are provided as in the above-mentioned embodiment, bulkiness of the stator core 27 can be limited in the vertical direction, and thus it is possible to make the electric power tool to be compact.

Further, in the above-mentioned embodiment, electric power supplied from an AC power supply (alternating-current power supply) such as a home power supply through the electric cord 18 is used as electric power supplied to the electric motor 21. However, the electric power supplied to the electric motor is not limited to this
example, and electric power supplied from an appropriately mounted rechargeable battery, may be used as the electric power supplied to the electric motor. That is, the electric power tool may be formed as an electric power tool on which a
rechargeable battery is mounted. Further, air-pressure that is appropriately supplied to the electric power tool can also be used as a source of power. Further, the electric motor 21 of the above-mentioned embodiment forms a so-called brush motor. However, the electric motor is not limited to this example, and may form an appropriate
brushless motor. Meanwhile, when the electric motor forms a brushless motor as described above, permanent magnets are used to form a rotor.

## Claims

1. An electric power tool (10) comprising:
a motor housing (120) that extends in a longitudinal direction;
a gear case (140) that is located on a front side of the motor housing (120);
a grip housing (160) that extends downward from the motor housing (120);
an electric motor (21) that is mounted inside the motor housing (120);
a power transmission mechanism section (14) that is placed within the gear case (140); and
an output shaft (37) that protrudes forward from a front end of the gear case (140) and outputs power from the power transmission mechanism section (14), wherein:
the electric motor (21) includes a stator core (27) that is fixed to the motor housing (120), a coil (28) that is integrally wound around the stator core (27), and a rotor (23) that is provided on the inner periphery of the stator core (27) and is rotated relative to the stator core (27);
the coil (28) includes protruding coil portions (281, 282);
the motor housing (120) is formed by combining a half-split left housing (201) and a half-split right housing (202);
a first and a second combining screw (450, 460) are used to combine the half-split left housing (201) and the half-split right housing (202); and
the protruding coil portions (281, 282) are located on either a front side or a rear side of the first and second combining screws (450, 460),
**characterized in that**
the protruding coil portions (281, 282) protrude outwardly from the stator core (27) in a radial direction.

2. The electric power tool (10) according to claim 1, wherein:
the coil (28) includes a front protruding coil portion (281) that protrudes outwardly from the stator core (27) in a radial direction on the front side of the stator core (27), and also includes a rear protruding coil portion (282) that protrudes outwardly from the stator core (27) in a radial direction on the rear side of the stator core (27); and
the first and second combining screws (450, 460) are located between the front protruding coil portion (281) and the rear protruding coil portion (282) to combine the half-split left housing (201) and the half-split right housing (202).

3. The electric power tool (10) according to claim 2, wherein
the rear protruding coil portion (282) is formed to be larger than the front protruding coil portion (281).

4. The electric power tool (10) according to any one of claims 1 to 3,
wherein the electric power tool (10) further comprises a bearing box (51) that is located on a rear side of the gear case (140);
wherein:
the half-split left housing (201) and the half-split right housing (202) are screwed together by a third combining screw (430) and a fourth combining screw (440);
the half-split left housing (201) is screwed to the front case (140) by a left upper screw (710) and a left lower screw (720) which are separately located from each other in the vertical direction and are located along the extending direction of the front case (140);
the half-split right housing (202) is screwed to the front case (140) by a right upper screw (730) and a right lower screw (740) which are separately located from each other in the vertical direction and are located along the extending direction of the front case (140);
the third combining screw (430) is configured above the bearing box (51) and below the left upper screw (710) and the right upper screw (730); and
the fourth combining screw (440) is configured below the bearing box (51) and above the left lower screw (720) and the right lower screw (740).

5. The electric power tool (10) according to claim 4, wherein
the third combining screw (430) and the fourth combining screw (440) are located between the left upper screw (710) and the left lower screw (720), and also between the right upper screw (730) and the right lower screw (740).

6. The electric power tool (10) according to claim 4 or 5, wherein
the bearing box (51) includes an exposed portion (511) which is exposed outward and which is connected to a rear side of the gear case (140); and
a cover (15) is provided to cover the exposed portion (511) and a part of the outer circumference of the gear case (140).

## Patentansprüche

1. Elektrisches Kraftwerkzeug (10), mit
einem Motorgehäuse (120), das sich in einer Längsrichtung erstreckt,
einem Getriebegehäuse (140), das sich an einer vorderen Seite des Motorgehäuses (120) befindet,
einem Griffgehäuse (160), das sich nach unten von dem Motorgehäuse (120) erstreckt, einem elektrischen Motor (21), der im Inneren des Motorgehäuses (120) montiert ist, einem Leistungsübertragungsmechanismusabschnitt (14), der innerhalb des Getriebegehäuses (140) angeordnet ist, und
einer Ausgabewelle (37), die nach vorne von einem vorderen Ende des Getriebegehäuses (140) vorsteht und Leistung von dem Leistungsübertragungsmechanismusabschnitt (14) ausgibt, bei dem
der elektrische Motor (21) einen Statorkern (27), der an dem Motorgehäuse (120) fixiert ist, eine Spule (28), die integral um den Statorkern (27) gewickelt ist, und einen Rotor (23) aufweist, der an dem inneren Umfang des Statorkerns (27) vorgesehen ist und relativ zu dem Statorkern (27) gedreht wird,
die Spule (28) vorstehende Spulenbereiche (281, 282) aufweist,
das Motorgehäuse (120) ausgebildet ist durch Verbinden einer linken Gehäusehälfte (201) und einer rechten Gehäusehälfte (202),
eine erste und eine zweite Verbindungsschraube (450, 460) zum Verbinden der linken Gehäusehälfte (201) und der rechten Gehäusehälfte (202) verwendet werden, und
die vorstehenden Spulenbereiche (281, 282) sich an der Vorderseite oder der Rückseite der ersten und der zweiten Verbindungsschraube (450, 460) befinden,
**dadurch gekennzeichnet, dass**
die vorstehenden Spulenbereiche (281, 282) nach außen von dem Statorkern (27) in einer radialen Richtung vorstehen.

2. Elektrisches Kraftwerkzeug (10) nach Anspruch 1, bei dem
die Spule (28) einen vorderen vorstehenden Spulenbereich (281) aufweist, der nach außen von dem Statorkern (27) in einer radialen Richtung an der vorderen Seite des Statorkerns (27) vorsteht, und ebenso einen hinteren vorstehenden Spulenbereich (282) aufweist, der nach außen von dem Statorkern (27) in einer radialen Richtung an der hinteren Seite des Statorkerns (27) vorsteht, und
die erste und die zweite Verbindungsschraube (450, 460) sich zwischen dem vorderen vorstehenden Spulenbereich (281) und dem hinteren vorstehenden Spulenbereich (282) zum Verbinden der linken Gehäusehälfte (201) und der rechten Gehäusehälfte (202) befinden.

3. Elektrisches Kraftwerkzeug (10) nach Anspruch 2, bei dem
der hintere vorstehende Spulenbereich (282) größer ausgebildet ist als der vordere vorstehende Spulenbereich (281).

4. Elektrisches Kraftwerkzeug (10) nach einem der Ansprüche 1 bis 3,
bei dem der elektrische Motor (10) ferner ein Lagerungsgehäuse (51) aufweist, das sich an einer hinteren Seite des Getriebegehäuses (140) befindet,
bei dem
die linke Gehäusehälfte (201) und die rechte Gehäusehälfte (202) miteinander verschraubt werden durch eine dritte Verbindungsschraube (430) und eine vierte Verbindungsschraube (440),
die linke Gehäusehälfte (201) an das vordere Gehäuse (140) durch eine linke obere Schraube (710) und eine linke untere Schraube (720) geschraubt wird, welche sich separat voneinander in der vertikalen Richtung befinden und sich entlang der Erstreckungsrichtung des vorderen Gehäuses (140) befinden,
die rechte Gehäusehälfte (202) an das vordere Gehäuse (140) durch eine rechte obere Schraube (730) und eine rechte untere Schraube (740) geschraubt wird, welche sich separat voneinander in der vertikalen Richtung befinden und sich entlang der Erstreckungsrichtung des vorderen Gehäuses (140) befinden,
die dritte Verbindungsschraube (430) oberhalb des Lagerungsgehäuses (51) und unterhalb der linken oberen Schraube (710) und der rechten oberen Schraube (730) konfiguriert ist, und
die vierte Verbindungsschraube (440) unterhalb des Lagerungsgehäuses (51) und oberhalb der linken unteren Schraube (720) und der rechten unteren Schaube (740) konfiguriert ist.

5. Elektrisches Kraftwerkzeug (10) nach Anspruch 4, bei dem
die dritte Verbindungsschraube (430) und die vierte Verbindungsschraube (440) sich zwischen der linken oberen Schraube (710) und der linken unteren Schraube (720) und ebenso zwischen der rechten oberen Schraube (730) und der rechten unteren Schraube (740) befinden.

6. Elektrisches Kraftwerkzeug (10) nach Anspruch 4 oder 5, bei dem
das Lagerungsgehäuse (51) einen freigelegten Bereich (511) aufweist, welcher nach außen freigelegt ist, und welcher mit einer hinteren Seite des Getriebegehäuses (140) verbunden ist, und
eine Abdeckung (15) zum Abdecken des freigelegten Bereichs (511) und eines Teils des Außenumfangs des Getriebegehäuses (140) vorgesehen ist.

## Revendications

1. Outil électrique (10) comprenant :
un boîtier de moteur (120) qui s'étend dans une direction longitudinale ;
un carter d'engrenage (140) qui est situé sur un côté avant du boîtier de moteur **(120)** ;
un boîtier de poignée (160) qui s'étend vers le bas à partir du boîtier de moteur (120) ;
un moteur électrique (21) qui est monté à l'intérieur du boîtier de moteur (120) ;
une section de mécanisme de transmission de puissance (14) qui est placée à l'intérieur du carter d'engrenage (140) ; et
un arbre de sortie (37) qui fait saillie vers l'avant à partir d'une extrémité avant du carter d'engrenage (140) et qui délivre de la puissance de la section de mécanisme de transmission de puissance (14), dans lequel :
le moteur électrique (21) comprend un noyau de stator (27) qui est fixé au boîtier de moteur (120), une bobine (28) qui est enroulée intégralement autour du noyau de stator (27), et un rotor (23) qui est prévu sur la périphérie interne du noyau de stator (27) et est tourné par rapport au noyau de stator (27) ;
la bobine (28) comprend des parties saillantes de bobine (281, 282) ;
le boîtier de moteur (120) est formé en combinant un boîtier gauche demi-fendu (201) et un boîtier droit demi-fendu (202) ;
une première et une deuxième vis de combinaison (450, 460) sont utilisées pour combiner le boîtier gauche demi-fendu (201) et le boîtier droit demi-fendu (202) ; et
les parties saillantes de bobine (281, 282) sont situées soit sur un côté avant, soit sur un côté arrière des première et seconde vis de combinaison (450, 460),
**caractérisé en ce que** les parties saillantes de bobine (281, 282) font saillie vers l'extérieur du noyau de stator (27) dans une direction radiale.

2. Outil électrique (10) selon la revendication 1, dans lequel :
la bobine (28) comprend une partie saillante avant de bobine (281) qui fait saillie vers l'extérieur à partir du noyau de stator (27) dans une direction radiale sur le côté avant du noyau de stator (27), et comprend également une partie saillante arrière de bobine (282) qui fait saillie vers l'extérieur à partir du noyau de stator (27) dans une direction radiale sur le côté arrière du noyau de stator (27) ; et
les première et deuxième vis de combinaison (450, 460) sont situées entre la partie saillante avant de bobine (281) et la partie saillante arrière de bobine (282) pour combiner le boîtier gauche demi-fendu (201) et le boîtier droit demi-fendu (202).

3. Outil électrique (10) selon la revendication 2, dans lequel
la partie saillante arrière de bobine (282) est formée pour être plus grande que la partie saillante avant de bobine (281).

4. Outil électrique (10) selon l'une quelconque des revendications 1 à 3,
dans lequel l'outil électrique (10) comprend en outre une boîte de palier (51) qui est située sur un côté arrière du carter d'engrenage (140) ;
dans lequel :
le boîtier gauche demi-fendu (201) et le boîtier droit demi-fendu (202) sont vissés ensemble par une troisième vis de combinaison (430) et une quatrième vis de combinaison (440) ;
le boîtier gauche demi-fendu (201) est vissé sur le carter avant (140) par une vis supérieure gauche (710) et une vis inférieure gauche (720) qui sont situées séparément l'une de l'autre dans la direction verticale et sont situées le long de la direction d'extension du carter avant (140) ;
le boîtier droit demi-fendu (202) est vissé sur le carter avant (140) par une vis supérieure droite (730) et une vis inférieure droite (740) qui sont situées séparément l'une de l'autre dans la direction verticale et sont situées le long de la direction d'extension du carter avant (140) ;
la troisième vis de combinaison (430) est configurée au-dessus de la boîte de palier (51) et au-dessous de la vis supérieure gauche (710) et de la vis supérieure droite (730) ; et
la quatrième vis de combinaison (440) est configurée sous la boîte de palier (51) et au-dessus de la vis inférieure gauche (720) et de la vis inférieure droite (740).

5. Outil électrique (10) selon la revendication 4, dans lequel
la troisième vis de combinaison (430) et la quatrième vis de combinaison (440) sont situées entre la vis supérieure gauche (710) et la vis inférieure gauche (720), et également entre la vis supérieure droite (730) et la vis inférieure droite (740).

6. Outil électrique (10) selon la revendication 4 ou 5, dans lequel
la boîte de palier (51) comprend une partie exposée (511) qui est exposée vers l'extérieur et qui est reliée à un côté arrière du carter d'engrenage (140) ; et
un couvercle (15) est prévu pour couvrir la partie exposée (511) et une partie de la circonférence extérieure du carter d'engrenage (140).
